# FASCICULE DE BREVET EUROPEEN

(11) **EP 1 066 672 B1**
(45) Date de publication et mention de la délivrance du brevet: **14.09.2005**
(21) Numéro de dépôt: 99910432.6
(22) Date de dépôt: 26.03.1999
(51) Int. Cl.: H02H 7/085, B25B 5/12

(54) **DISPOSITIF DE MAINTIEN, DE POSITIONNEMENT OU DE SERRAGE**
VORRICHTUNG ZUM HALTEN, POSITIONIEREN ODER SPANNEN
MAINTAINING, POSITIONING OR CLAMPING DEVICE

(30) Priorité: 27.03.1998 FR 9803800
(43) Date de publication de la demande: 10.01.2001
(73) Titulaire: Genus Technologies, 92320 Châtillon (FR)
(72) Inventeur: MOREL, Michel, F-95120 Ermont (FR); ROUDIER, Fabrice, F-78820 Juziers (FR)
(74) Mandataire: Kaspar, Jean-Georges
(86) Numéro de dépôt international: PCT/FR1999/000701
(87) Numéro de publication internationale: WO 1999/050944

(56) Documents cités:
- EP-A- 0 243 599
- EP-A- 0 247 994
- EP-A- 0 590 227
- DE-A- 19 612 596
- FR-A- 2 377 114
- US-A- 4 623 826
- US-A- 4 747 320
- US-A- 5 483 135
- US-A- 5 524 541

## Description

L'invention est relative à un dispositif de positionnement, de maintien ou de serrage, comprenant un mécanisme de positionnement, de maintien ou de serrage, actionné par un moyen moteur rotatif tel qu'un moteur électrique.

L'invention est particulièrement utile pour le maintien, le positionnement ou le serrage de pièces de carrosserie, du type comportant un boîtier contenant un équipage mobile déplaçable en translation sous l'action d'un moyen d'actionnement.

Le document US 5.483.135 décrit un système adaptatif et un procédé pour commander le fonctionnement d'une glace de véhicule, qui n'est pas utilisable pour le maintien, le positionnement ou le serrage de pièces de carrosserie.

Le document EP 243 599 décrit un dispositif de serrage, notamment pour le serrage de pièces de carrosserie, du type comportant au moins un boîtier contenant un équipage mobile déplaçable sous l'action d'un moteur électrique, des moyens de détection de position et des moyens de commande et d'alimentation du moteur électrique. Comme l'interrogation de fin de course "ouvert" ou "fermé"est souvent effectuée à travers des interrupteurs électriques de fin de course, ceci signifie également un avantage en ce qui concerne l'entraînement électrique. Ce document EP 243 599 ne décrit pas que des moyens de détection de position sont liés avec des moyens de commande et d'aümentation, pour commander les moyens d'alimentation du moteur électrique en fonction d'une position détectée par des moyens de détection de position.

Les dispositifs du document EP 243 599 sont peu utilisés en pratique en raison du risque d'échauffement et de détérioration électrique, en particulier en position de serrage.

L'invention a pour but de remédier aux inconvénients de la technique connue, en proposant un nouveau dispositif comportant un moteur électrique de type particulier ainsi que des moyens de commande de type particulier, tout en assurant une précision et une force de maintien, de positionnement ou de serrage, comparables aux caractéristiques de l'art antérieur.

L'invention a pour objet un dispositif de maintien, de positionnement, ou de serrage pour le maintien, le positionnement, ou le serrage de pièces de carrosserie selon la revendication 1.

Selon d'autres caractéristiques de l'invention :
- les moyens de commande comportent des moyens de commande de départ donnant un ordre de départ pour alimenter le moteur électrique, des moyens de détection d'une position d'arrivée en butée et des moyens de mémorisation de cette position d'arrivée en butée comme position dé référence initiale du dispositif, agencés en combinaison pour initialiser le dispositif dans une position de blocage mécanique ou de butée,
- le dispositif comporte un ensemble modulaire d'alimentation en énergie et de contrôle du moteur électrique relié à un capteur de rotation tel qu'un codeur rotatif,
- ledit ensemble modulaire comporte un moyen de commutation entre plusieurs positions prédéterminées correspondant chacune à une course, un angle ou un déplacement de valeur choisie pour effectuer un positionnement, un maintien ou un serrage prédéterminé,
- l'ensemble modulaire d'alimentation en énergie et de contrôle du moteur électrique comporte une mémoire apte à mémoriser la position du mécanisme motorisé lors d'un cycle de fonctionnement actuel,
- l'ensemble modulaire d'alimentation en énergie et de contrôle du moyen moteur rotatif comporte une mémoire apte à mémoriser la position du mécanisme motorisé lors d'un cycle de fonctionnement précédent,
- l'ensemble modulaire d'alimentation en énergie et de contrôle est apte à comparer une position actuelle de mécanisme motorisé avec une position précédente de mécanisme motorisé, en vue de détecter une anomalie de fonctionnement du dispositif,
- le moyen d'actionnement comporte un carter contenant un pignon monté et entraîné directement par l'arbre du moteur électrique, ainsi qu'une roue dentée formant écrou d'entraînement en translation d'une tige filetée de l'équipage mobile,
- le moyen d'actionnement est conformé pour assurer une fonction d'antiréversibilité ou de maintien en position du dispositif à l'arrêt en l'absence d'alimentation électrique du moyen électrique,
- ledit carter comporte une plaque de fermeture ou un couvercle percé portant d'un côté le moteur électrique dont l'arbre s'étend à travers le perçage de la plaque de fermeture ou couvercle, de manière à supporter ledit pignon du côté opposé au côté portant le moteur électrique.

L'invention sera mieux comprise grâce à la description qui va suivre donnée à titre d'exemple non limitatif en référence aux dessins annexés dans lesquels :
- la figure 1 représente schématiquement une vue en perspective d'un ensemble de dispositifs selon l'invention avec agrandissement partiel d'un coffret contenant des ensembles modulaires,
- la figure 2 représente schématiquement un organigramme d'initialisation d'un dispositif selon l'invention,
- la figure 3 représente schématiquement un organigramme de maintien, de positionnement ou de serrage d'un dispositif selon l'invention,
- la figure 4 représente schématiquement un organigramme de libération, ou de desserrage d'un dispositif selon l'invention,
- la figure 5 représente schématiquement un organigramme de détection d'incident d'un dispositif selon l'invention,
- la figure 6 représente schématiquement une vue avec coupe partielle selon le plan longitudinal de symétrie d'un dispositif selon l'invention en position d'ouverture.
- la figure 7 représente schématiquement une vue avec coupe longitudinale partielle d'un dispositif selon l'invention en position de fermeture à proximité de la butée de fin de course,

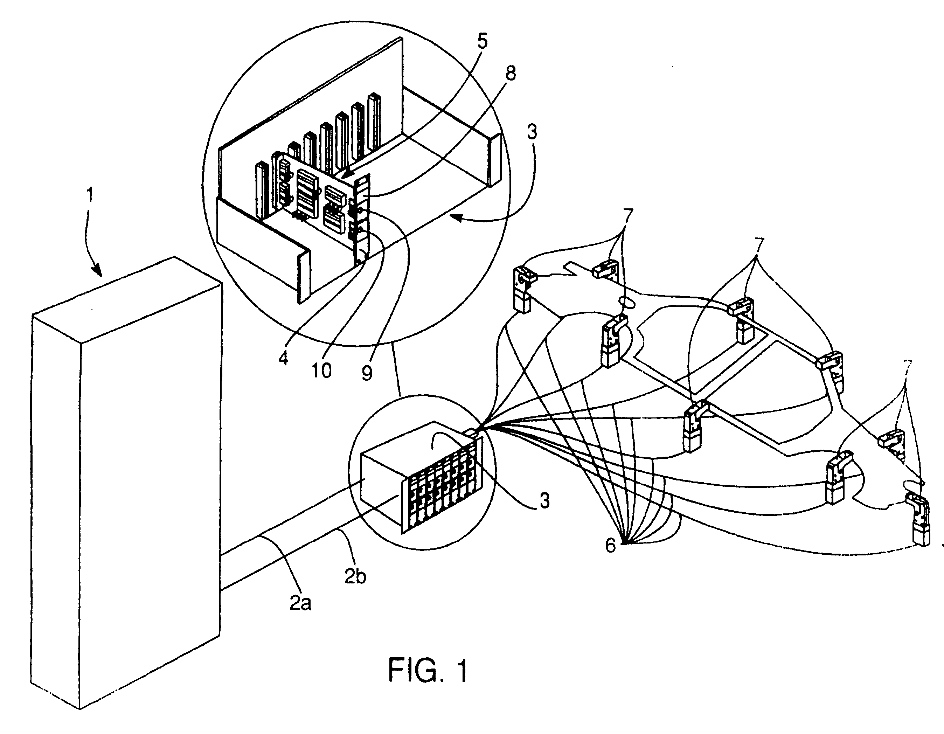

En référence à la figure 1, une armoire de commande ou un automate programmable 1 est relié par liaison filaire 2a, 2b à un coffret 3 contenant une pluralité d'ensembles modulaires 4. Chaque ensemble modulaire 4 est constitué avantageusement sous forme d'au moins une carte électronique 5 de contrôle et d'alimentation en énergie. Les ensembles modulaires 4 contenus dans le coffret 3 sont chacun reliés individuellement par liaison filaire 6 à des mécanismes motorisés 7 de maintien, de positionnement ou de serrage. Ces mécanismes motorisés 7 bien connus de l'homme du métier ne nécessitent pas de description plus détaillée.

L'invention décrite en référence à des ensembles modulaires d'alimentation en énergie et de contrôle contenus dans un coffret n'est pas limitée à cette variante de réalisation, mais couvre également toute variante dans laquelle l'ensemble modulaire 4 est intégré au mécanisme motorisé, et constitue un mécanisme dit "intelligent" commandable et contrôlable directement par l'automate programmable ou l'armoire centrale de commande 1.

Chaque ensemble modulaire 4 comporte avantageusement, non seulement une carte électronique 5, mais également des organes ou des boutons de sélection 8, 9, 10 destinés à modifier la vitesse du mécanisme, la course du mécanisme ou à passer d'un type de fonctionnement à un autre type de fonctionnement.

De préférence, chaque moyen moteur est associé à un capteur de déplacement du moyen moteur : dans le cas d'un moyen moteur rotatif tel qu'un moteur électrique, on prévoit avantageusement un capteur de rotation associé tel qu'un codeur rotatif, de manière à mesurer en continu le nombre de tours ou la rotation du moyen moteur rotatif.

Les cartes 5 individuelles associées chacune à un mécanisme 7 motorisé comportent également de préférence un interrupteur permettant un isolement de l'automate programmable 1 ou armoire centrale de commande, afin d'effectuer individuellement sur la carte 5 considérée les manoeuvres d'ouverture, de fermeture ou d'initialisation relatives au mécanisme motorisé 7 associé.

En variante, l'interrupteur précité peut être remplacé par un réglage commandé par un programme d'ordinateur tenant compte de valeurs ou de programmes préétablis stockés en mémoire morte (ROM ou EEPROM).

De manière avantageuse, l'ensemble des liaisons filaires 2a, 2b ou 6 peut être remplacé par une liaison en série, du genre bus, pour relier le coffret 3 aux mécanismes 7 et à l'automate programmable 1, à l'aide d'une liaison matérielle unique au moyen d'un protocole de communication série approprié.

Les liaisons filaires, câbles, fils ou bus de liaison peuvent être des liaisons conductrices ou des liaisons optiques, faisant intervenir des conducteurs métalliques ou des fibres optiques.

Chaque ensemble modulaire 4 comporte avantageusement un moyen de commutation entre plusieurs positions prédéterminées correspondant chacune à une course, un angle ou un déplacement de valeur choisie pour effectuer un positionnement, un maintien ou un serrage prédéterminé.

La commutation entre deux positions prédéterminées choisies correspondant chacune à un débattement différent du mécanisme motorisé est effectuée soit manuellement à l'aide d'un organe approprié, par exemple un commutateur 9 accessible en face avant du coffret 3, soit sur commande de l'automate programmable 1 consécutive à la réception d'une information sur le modèle de pièce suivant à maintenir positionné ou serré.

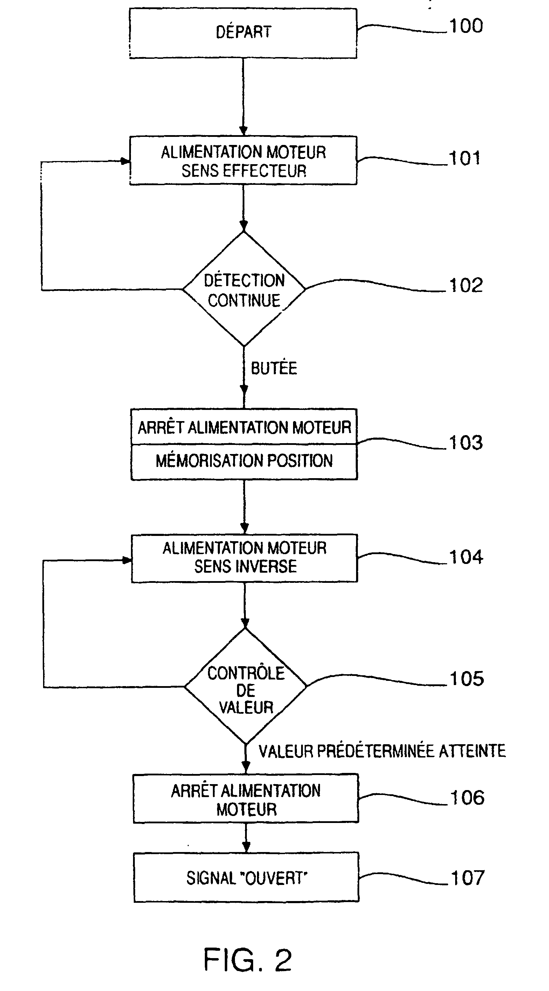

En référence à la figure 2, l'initialisation d'un dispositif selon l'invention débute par un ordre de départ à une étape 100 de commande de départ.

La commande de départ peut être effectuée à l'aide d'un bouton poussoir en face avant du coffret 3 ou être transmise par l'automate programmable ou armoire centrale de commande 1.

A partir de l'ordre de départ, le dispositif alimente le moteur d'un mécanisme motorisé 7 à une étape 101 dans le sens correspondant à l'effet du dispositif : il s'agit par exemple de la fermeture d'un serrage 7.

L'alimentation continue tant que la position d'arrivée en butée n'est pas détectée à une étape 102, dans laquelle on teste si le dispositif est arrivé à une position de butée correspondant à l'effet du dispositif, par exemple à un serrage de pièce.

Après cette arrivée en butée, on coupe à l'étape 103 l'alimentation du moteur et on mémorise cette position comme position de référence initiale du dispositif.

On alimente ensuite à l'étape 104 le moteur dans le sens contraire, par exemple dans le sens de l'ouverture du serrage, tout en mesurant la rotation du moteur pendant cette ouverture.

On contrôle la rotation du moteur à l'étape 105, et on continue à alimenter le moteur jusqu'à ce qu'un angle prédéterminé de rotation soit atteint.

On coupe ensuite à l'étape 106 l'alimentation du moteur, et on émet à l'étape 107 un signal d'indication d'ouverture du serrage, ou de libération de la pièce à maintenir ou à positionner vers l'automate programmable ou armoire de commande 1.

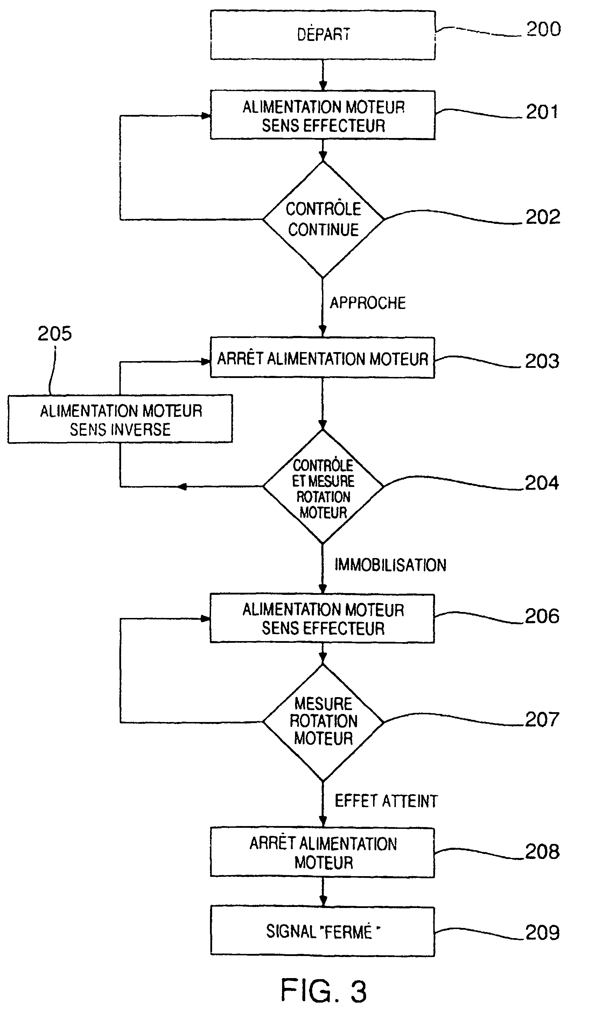

En référence à la figure 3, le maintien, le positionnement ou le serrage d'un dispositif selon l'invention débute par un ordre de départ à une étape 200 de commande de départ. La commande de départ peut être effectuée manuellement ou en résultat d'un signal transmis par l'automate programmable ou armoire centrale de commande.

A partir de l'ordre de départ, le dispositif alimente le moteur dans le sens correspondant à l'effet du dispositif à une étape 201 : il s'agit par exemple de la fermeture d'un serrage 7.

Le déplacement du dispositif est surveillé pendant une étape 202 pour contrôler de manière continue si l'on a atteint ou non une position d'approche prédéterminée, correspondant à un nombre de tours prédéterminé depuis la position de départ.

Après avoir atteint la position d'approche prédéterminée, on arrête l'alimentation du moteur à l'étape 203, de manière à pouvoir immobiliser le moteur.

On vérifie à l'étape 204 si le moteur est immobilisé ou si sa vitesse est nulle et on réagit éventuellement à une vitesse non nulle du moteur par une étape 205 d'alimentation du moteur en sens inverse correspondant au freinage électrique du moteur.

Après immobilisation du moteur, on passe à l'étape 206 pour effectuer la rotation restante jusqu'à obtention du plein effet du serrage. A cet effet, on alimente à nouveau le moteur dans le sens effecteur du dispositif tout en contrôlant à l'étape 207 si la rotation du moteur atteint une valeur prédéterminée ou si l'effet du dispositif est atteint, par exemple si le serrage de la pièce est obtenu.

Si le dispositif atteint son plein effet, on arrête l'alimentation du moteur à l'étape 208.

On émet ensuite à l'étape 209 un signal "fermé"correspondant, par exemple un signal de fermeture d'un serrage en direction de l'automate programmable 1 ou armoire centrale de commande.

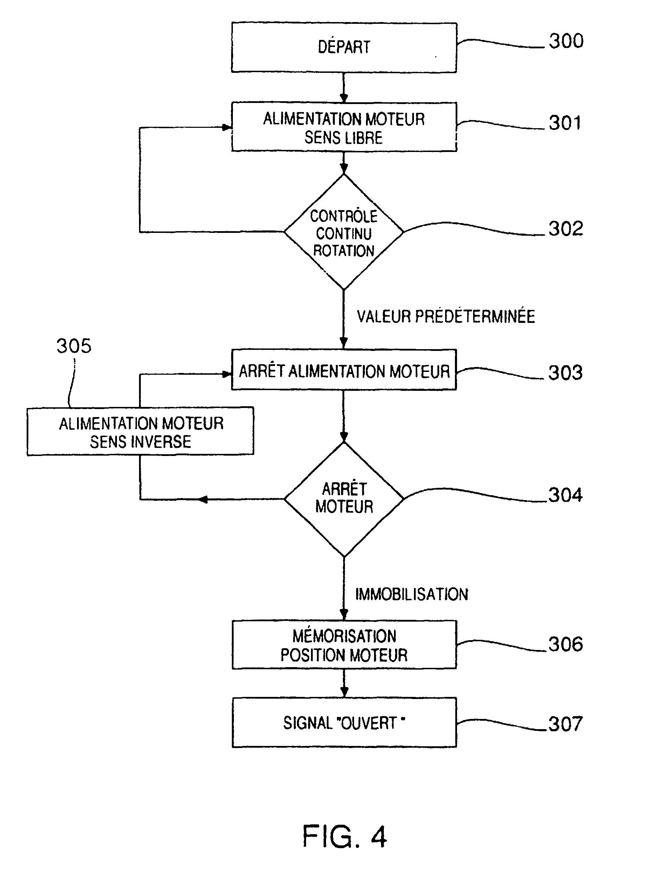

En référence à la figure 4, l'ouverture d'un dispositif selon l'invention débute par un ordre de départ à une étape 300 de commande de départ, déclenché manuellement ou par un signal émis par un automate programmable 1 ou une armoire centrale de commande.

On alimente ensuite continûment le moteur dans le sens de libération, ou de desserrage du dispositif à une étape 301, tout en effectuant un contrôle continu de rotation du moteur à une étape 302.

Lorsque la valeur prédéterminée de libération ou de desserrage est atteinte et constatée à l'étape 302, on passe immédiatement à l'étape 303 d'arrêt d'alimentation du moteur.

On vérifie ensuite à l'étape 304 que le moteur est arrêté, avec freinage éventuel du moteur par alimentation du moteur en sens inverse dans une étape auxiliaire 305.

Lorsque la vérification de l'étape 304 a permis de constater l'immobilisation du moteur, on passe à l'étape 306 de mémorisation de la position du moteur, puis on émet à l'étape 307 un signal d'ouverture, de libération, ou de desserrage du dispositif en direction de l'automate programmable 1 ou armoire centrale de commande.

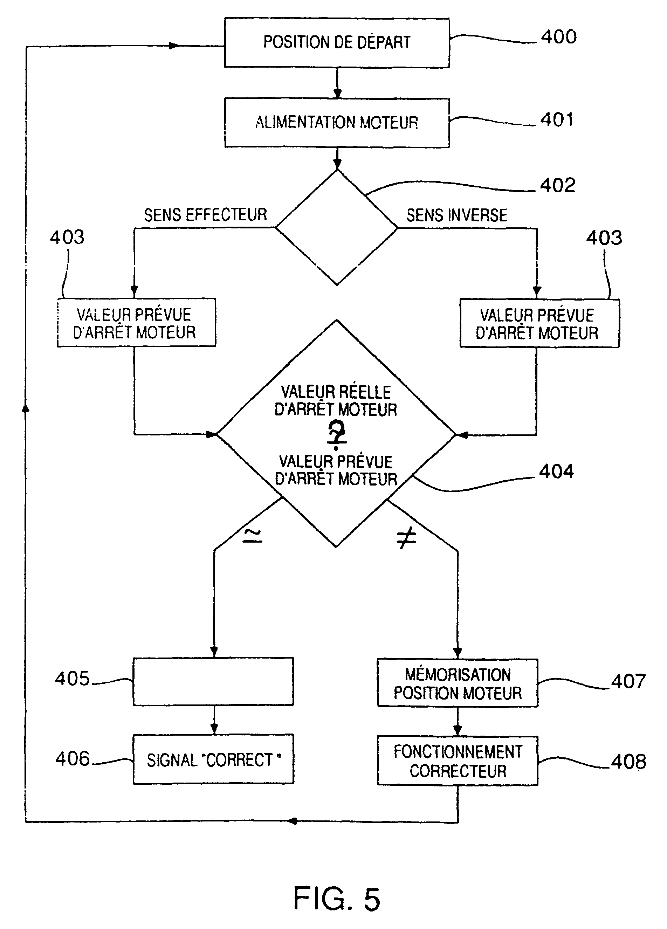

En référence à la figure 5, la détection d'incident de fonctionnement d'un dispositif selon l'invention correspond à une surveillance continue du fonctionnement du dispositif à partir d'une étape de départ 400 pouvant correspondre à une étape 200 de la figure 3 ou une étape 300 de la figure 4.

A partir de l'étape de départ 400 précitée et de la position correspondante mémorisée à cet effet dans l'ensemble modulaire, l'alimentation du moteur est effectuée dans le sens correspondant au fonctionnement souhaité du dispositif à l'étape 401.

Un test est effectué à l'étape 402 pour prévoir en fonction du sens d'alimentation du moteur et de la position de départ quelle est la valeur attendue de position de moteur correspondant au prochain arrêt.

Cette valeur prévue correspondant à la position d'arrêt du moteur est mémorisée à l'étape 403 dans une mémoire.

On effectue ensuite une comparaison à l'étape 404 entre la valeur réelle d'arrêt du moteur et la valeur prévue.

Si la valeur réelle de position d'arrêt du moteur est sensiblement identique à la valeur prévue de position d'arrêt du moteur, on passe à l'étape 405 correspondant à une constatation de fonctionnement correct, et on émet éventuellement à une étape 406 un signal de fonctionnement correct.

Si la différence entre la valeur réelle de position d'arrêt du moteur et la valeur prévue de position d'arrêt du moteur excède une limite prédéterminée, on passe à l'étape 407 de fonctionnement incorrect du moteur et on mémorise la position incorrecte du moteur à cette étape 407 avant d'effectuer un procédé décrit en référence à la figure 3 ou procédé décrit en référence à la figure 4, en vue de faciliter le retrait d'obstacle ou de butée indésirable entravant le bon fonctionnement du dispositif.

On effectue à l'étape 408 le fonctionnement correcteur du dispositif précité et on corrige avec une intervention automatique ou manuelle l'anomalie du dispositif.

Après correction de l'anomalie, la surveillance continue du fonctionnement du dispositif débute à nouveau à l'étape 400 correspondant à une position mémorisée de départ du cycle précédent.

La comparaison entre cycles successifs du fonctionnement du dispositif permet ainsi de tenir compte de l'usure du mécanisme et de compenser le décalage de fonctionnement progressif qui se produit au fur et à mesure de l'usure de ces mécanismes.

En outre, la mémorisation de la position du moteur en cas d'anomalie permet de ne pas libérer accidentellement une pièce maintenue ou serrée, notamment en cas de coupure accidentelle d'énergie pouvant conduire à une modification indésirable de la position du dispositif.

La détection d'anomalie assure la sécurité du personnel et permet le dégagement d'un membre puis par le dispositif, en inversant le fonctionnement du dispositif, comme décrit en référence aux étapes 407 et 408.

Même dans le cas où des moyens auxiliaires de déblocage manuel sont prévus, soit sur un codeur rotatif, soit sur un organe de transmission relié à un train d'engrenages ou directement au mécanisme effecteur, l'enregistrement continu de la position du dispositif grâce au codeur rotatif permet de connaître la position réelle du dispositif et évite de transmettre des signaux contradictoires à l'armoire centrale de commande ou automate programmable 1, ainsi que de recevoir des signaux ne correspondant pas au cycle à effectuer.

Cette disposition évite ainsi des fonctionnements accidentels susceptibles d'entraîner des risques pour le personnel et le matériel environnant.

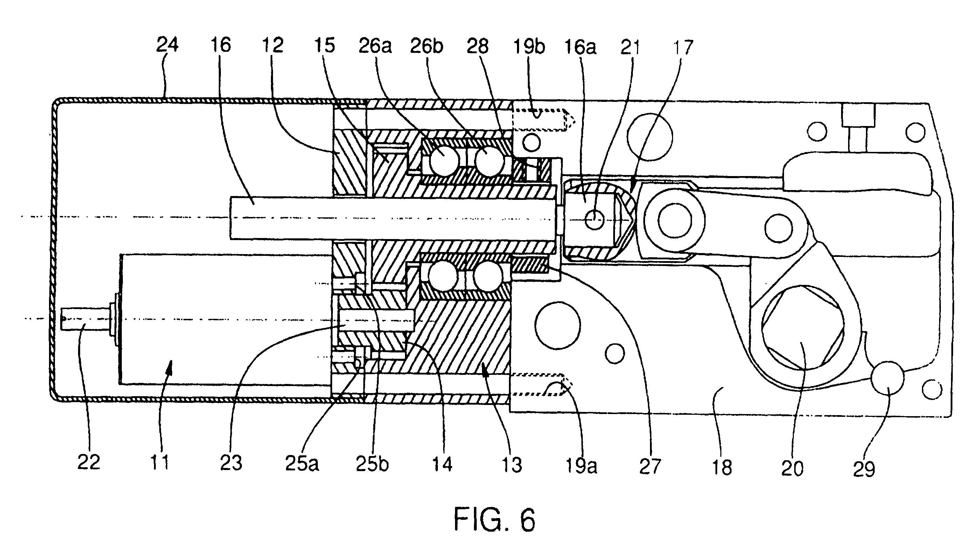

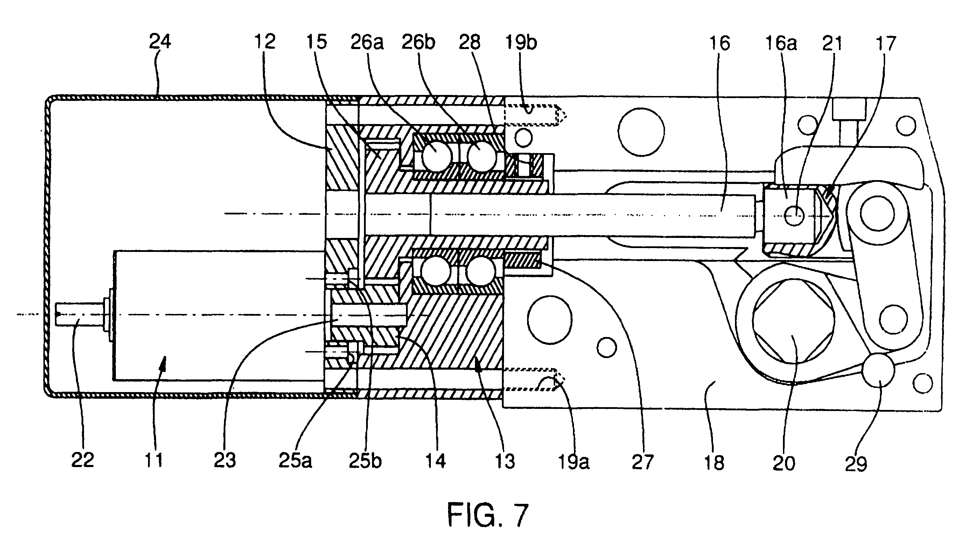

En référence aux figures 6 et 7, les chiffres de référence identiques désignent des éléments identiques ou fonctionnement équivalents.

Le dispositif comporte un moteur électrique 11 monté sur une plaque de fermeture 12 ou un couvercle d'un carter 13 contenant un pignon 14 engrenant avec une roue dentée 15 formant écrou d'entraînement en translation d'une tige filetée 16 d'un équipage 17 mobile en translation. Le carter 13 est monté à l'extrémité du boîtier 18 contenant l'équipage 17 mobile en translation par l'intermédiaire de vis non représentée venant se visser dans des taraudages 19a, 19b du boîtier 18.

Dans le cas d'un mécanisme, par exemple à rampe de forme, le mécanisme est par exemple destiné à maintenir ou serrer des pièces au moyen d'un bras de serrage non représenté solidaire du carré d'entraînement 20, de manière analogue au fonctionnement du dispositif décrit dans la demande FR 2.769.255.

La constitution du boîtier 18 par assemblage de deux coques symétriques par rapport à un plan de joint longitudinal et du mécanisme à genouillère entraîné par l'équipage mobile 17 est de type connu en soi et ne nécessite pas de description plus détaillée.

La tige filetée 16, de préférence à filetage trapézoïdal, présente une tête 16a fixée par un montage antirotation à l'équipage mobile 17 par exemple au moyen d'un axe 21 traversant la tête 16a et l'équipage mobile 17.

Le moteur 11 est de préférence un moteur à deux bouts d'arbre 22 et 23 : le bout d'arbre 22 permet en cas de panne l'entraînement mécanique du dispositif après avoir déposé le capot de protection 24 ; tandis que le bout d'arbre 23 est solidarisé avec le pignon 14 pour entraîner directement le pignon 14 engrenant avec la roue dentée extérieure de l'écrou d'entraînement 15.

De manière avantageuse, le couvercle 12 du carter 13 est fixé au carter 13 par les vis de fixation du carter 13 assurant également la fixation au boîtier 18 par vissage dans les taraudages 19a, 19b : cette disposition permet de réduire l'encombrement général du dispositif et fournit une fabrication économique et un montage simple à réaliser. Le couvercle 12 comporte également de préférence plusieurs logements 25a, 25b pour les vis de fixation du moteur 11 au couvercle 12.

L'écrou d'entraînement 15 de la tige filetée 16 est conformé extérieurement en roue dentée coopérant avec le pignon 14 ; cet écrou 15 est monté à rotation dans le carter 13 au moyen de deux roulements 26a, 26b serrés par un écrou terminal 27 bloqué par une vis pointeau engagée dans un taraudage radial 28. Lors de la mise en marche du moteur électrique, le bout d'arbre 23 entraîne son pignon solidaire 14 engrenant avec l'écrou 15 d'entraînement en translation de la tige filetée 16 de l'équipage mobile 17, ce qui provoque le passage de la position ouverte de la figure 6 jusqu'à la position de la figure 7 au voisinage de la fermeture et du contact de la bielle de la genouillère avec la butée 29 d'extrémité du dispositif.

La structure mécanique du dispositif selon l'invention est particulièrement simple, en raison du fait que le couvercle 12 du carter 13 porte le moteur électrique 11, d'un côté, le pignon 14 d'entraînement de l'autre côté monté sur l'arbre traversant 23 du moteur électrique ; tandis que le carter 13 contient l'écrou d'entraînement 15 maintenu en position par l'écrou de serrage 27 réglable ou démontable par l'extérieur dudit carter 13 : le dispositif selon l'invention est facilement assemblable et démontable à partir de trois modules distincts formant respectivement un module couvercle, un module carter, et un module boîtier assurant la fonction de maintien, de positionnement, ou de serrage. Il en résulte que l'invention est applicable non seulement aux serrages, mais encore à tous les dispositifs analogues, par exemple aux dispositifs de positionnement connus sous le nom de "porte-pilote".

Un codeur rotatif non représenté sur les figures 6 et 7 peut être monté indifféremment sur la tige filetée 16 ou sur l'extrémité d'arbre 22, pour mesurer continûment la rotation du moyen moteur rotatif 11 ou de la tige 16.

De préférence, on utilise comme moteur électrique, un moteur à courant continu à vitesse de rotation relativement élevée, par exemple de l'ordre de 3000 tours/minute, ce qui compte tenu d'un rapport de réduction inférieur à 1 et de préférence voisin de un demi, entraînera la roue dentée 15 formant écrou d'entraînement en translation à une vitesse de l'ordre de 1500 tours/minute.

Avantageusement également, le moyen d'actionnement est conformé pour assurer une fonction d'antiréversibilité ou de maintien en position du dispositif à l'arrêt en l'absence d'alimentation électrique du moteur électrique 11 : il suffit simplement de prévoir à cet effet que la pente du filetage trapézoïdal de la tige filetée 16 soit suffisamment faible pour que l'entraînement ne soit pas réversible, mais au contraire autofreinant.

L'invention décrite en référence à un mode de réalisation particulier n'y est nullement limitée, mais couvre au contraire toute modification de forme et toute variante de réalisation dans le cadre des revendications.

L'utilisation d'un dispositif selon l'invention comme pince de robot ou organe de préhension est également couverte par la présente invention.

## Revendications

1. Dispositif de maintien, de positionnement, ou de serrage pour le maintien, le positionnement, ou le serrage de pièces de carrosserie, du type comportant au moins un boîtier (18) contenant un équipage mobile (17) déplaçable en translation sous l'action d'un moyen d'actionnement comportant un moteur électrique (11), dans lequel le moteur électrique est un moteur à courant continu ou moteur réversible équivalent à un moteur à courant continu et apte à réaliser un freinage électrique,
dans lequel le dispositif comporte des moyens de commande et d'alimentation du moteur électrique (11),
et dans lequel les moyens de commande comportent des moyens de détection de position, de manière à commander les moyens d'alimentation du moteur électrique (11) en fonction de la position détectée par lesdits moyens de détection de position, pour éviter une alimentation du moteur électrique (11) dans une position de blocage présentant un risque d'échauffement et de détérioration du moteur électrique (11), de manière à pouvoir immobiliser le moteur électrique dans une position d'approche préalable à une position de plein effet, correspondant à un maintien, un positionnement ou un serrage de pièce de carrosserie, en arrêtant l'alimentation du moteur ou en alimentant le moteur en sens inverse correspondant au freinage électrique, puis en alimentant à nouveau le moteur pour effectuer la rotation restante jusqu'à obtention de la position de plein effet du dispositif de maintien, de positionnement, ou de serrage.

2. Dispositif selon la revendication 1, **caractérisé en ce que** les moyens de commande comportent des moyens de commande de départ (100) donnant un ordre de départ pour alimenter (101) le moteur électrique, des moyens de détection (102) d'une position d'arrivée en butée et des moyens de mémorisation (103) de cette position d'arrivée en butée comme position de référence initiale du dispositif, agencés en combinaison pour initialiser (100-107) le dispositif dans une position de blocage mécanique ou de butée.

3. Dispositif selon la revendication 1 ou 2, **caractérisé par le fait que** le dispositif comporte un ensemble modulaire (4) d'alimentation en énergie et de contrôle du moteur électrique relié à un capteur de rotation tel qu'un codeur rotatif.

4. Dispositif selon la revendication 3 **caractérisé en ce que** ledit ensemble modulaire (4) comporte un moyen de commutation entre plusieurs positions prédéterminées correspondant chacune à une course, un angle ou un déplacement de valeur choisie pour effectuer un positionnement, un maintien ou un serrage prédéterminé.

5. Dispositif selon la revendication 4 **caractérisé en ce que** l'ensemble modulaire d'alimentation en énergie et de contrôle du moteur électrique (11) comporte une mémoire apte à mémoriser la position du mécanisme (7) motorisé lors d'un cycle de fonctionnement actuel.

6. Dispositif selon la revendication 4, **caractérisé en ce que** l'ensemble modulaire d'alimentation en énergie et de contrôle du moyen moteur rotatif comporte une mémoire apte à mémoriser la position du mécanisme motorisé lors d'un cycle de fonctionnement précédent.

7. Dispositif selon la revendication 4 et la revendication 5, **caractérisé en ce que** l'ensemble modulaire (4) d'alimentation en énergie et de contrôle est apte à comparer une position actuelle de mécanisme (7) motorisé avec une position précédente de mécanisme motorisé, en vue de détecter une anomalie de fonctionnement du dispositif.

8. Dispositif selon l'une quelconque des revendications précédentes, **caractérisé en ce que** le moyen d'actionnement comporte un carter (13) contenant un pignon (14) monté et entraîné directement par l'arbre (23) du moteur électrique (11), ainsi qu'une roue dentée (15) formant écrou d'entraînement en translation d'une tige filetée (16) de l'équipage mobile (17).

9. Dispositif selon la revendication 8, **caractérisé en ce que** le moyen d'actionnement est conformé pour assurer une fonction d'antiréversibilité ou de maintien en position du dispositif à l'arrêt en l'absence d'alimentation électrique du moyen électrique (11).

10. Dispositif selon la revendication 8 ou 9, **caractérisé en ce que** ledit carter (13) comporte une plaque de fermeture ou un couvercle percé (12) portant d'un côté le moteur électrique (11) dont l'arbre (13) s'étend à travers le perçage de la plaque de fermeture (12) ou couvercle, de manière à supporter ledit pignon (14) du côté opposé au côté portant le moteur électrique (11).

## Patentansprüche

1. Vorrichtung zum Halten, Positionieren oder Spannen für das Halten, Positionieren oder Spannen von Karosserieteilen des Typs, der wenigstens ein Gehäuse (18) aufweist, in dem sich eine translatorisch unter der Wirkung einer einen Elektromotor (11) aufweisenden Betätigungseinrichtung bewegbare bewegliche Anordnung (17) befindet, bei der der Elektromotor ein Gleichstrommotor oder ein umkehrbarer, zu einem Gleichstrommotor äquivalenter Motor ist, der als elektrischer Bremsmotor geeignet ist, wobei die Vorrichtung Steuereinrichtungen zum Ansteuern und für die Stromzufuhr zum Elektromotor (11) aufweist und bei der die Steuereinrichtungen Positionsfühler aufweisen, um die Steuereinrichtungen für die Stromzufuhr zum Elektromotor (11) abhängig von der durch die Positionsfühler festgestellten Position zu betätigen, um die Stromzufuhr zum Elektromotor in einer blockierten Position, in der ein Risiko der Überhitzung und Beschädigung des Elektromotors besteht, zu vermeiden, so dass es möglich ist, den Elektromotor in einer angenäherten Stellung, bevor eine voll wirksame Endstellung erreicht ist, die einem Halten, Positionieren oder einem Spannen eines Karosserieteils entspricht, durch Unterbrechen der Stromzufuhr oder durch Stromzufuhr zum Elektromotor in umgekehrter Richtung, die dem elektrischen Bremsen entspricht, anzuhalten, um die Stromzufuhr zum Elektromotor danach erneut einzuschalten, um die verbleibende Drehung bis zum Erreichen der voll wirksamen Endstellung der Vorrichtung zum Halten, Positionieren oder zum Spannen durchzuführen.

2. Vorrichtung nach Anspruch 1, **dadurch gekennzeichnet, dass** die Steuereinrichtungen Steueranordnungen (100) zum Beginnen einer Ablauffolge aufweisen, die einen Steuerbefehl zum Beginn der Stromzufuhr (101) zum Elektromotor, zu den Positionsfühlern (102) abgeben, die das Erreichen einer Blockierstellung feststellen und zu Speichereinrichtungen (103) für diese Blockierstellung als anfängliche Referenzstellung der Vorrichtung leiten, die in Kombination angeordnet sind, um die Vorrichtung in einer Blockierstellung in einen Startzustand zu bringen.

3. Vorrichtung nach Anspruch 1 oder 2, **dadurch gekennzeichnet, dass** die Vorrichtung einen mit einem Drehungsaufnehmer, wie beispielsweise einem Drehgeber, verbundenen Satz Module (4) zur Energieversorgung und zur Steuerung des Elektromotors aufweist.

4. Vorrichtung nach Anspruch 3, **dadurch gekennzeichnet, dass** der Satz Module (4) eine Umschalteinrichtung zwischen mehreren vorgegebenen Stellungen aufweist, die jeweils einer vorgewählten Wegstrecke, einem Winkel oder einer Verschiebung entsprechen, um ein vorgegebenes Positionieren, ein Halten oder ein Spannen durchzuführen.

5. Vorrichtung nach Anspruch 4, **dadurch gekennzeichnet, dass** der Satz Module zur Energieversorgung und Steuerung des Elektromotors (11) einen Speicher aufweist, der geeignet ist, die Position der motorbetätigten Vorrichtung (7) während eines aktuellen Funktionszyklusablaufs zu speichern.

6. Vorrichtung nach Anspruch 4, **dadurch gekennzeichnet, dass** der Satz Module zur Energieversorgung und Steuerung des Drehantriebs einen Speicher aufweist, der geeignet ist, die Position der motorbetätigten Vorrichtung während eines vorhergehenden Funktionszyklusablaufs zu speichern.

7. Vorrichtung nach Anspruch 4 oder 5, **dadurch gekennzeichnet, dass** der Satz Module (4) zur Energieversorgung und Steuerung geeignet ist, eine aktuelle Stellung der motorbetätigten Vorrichtung (7) mit ihrer vorhergehenden Position zum Feststellen eines Funktionsfehlers der Vorrichtung zu vergleichen.

8. Vorrichtung nach einem der vorhergehenden Ansprüche, **dadurch gekennzeichnet, dass** die Betätigungseinrichtung ein Gehäuse (13) mit einem darin angeordneten Zahnrad (14) aufweist, das direkt von der Welle (23) des Elektromotors (11) angetrieben wird, sowie ein Zahnrad (15), das die Bewegungsmutter für die Translationsbewegung einer Gewindestange (16) einer Hebelanordnung (17) bildet.

9. Vorrichtung nach Anspruch 8, **dadurch gekennzeichnet, dass** die Betätigungseinrichtung so eingerichtet ist, dass sie eine Selbsthemmung oder ein Festhalten der Vorrichtung im Stillstand bei Unterbrechung der Stromzufuhr zum Elektromotor (11) gewährleistet.

10. Vorrichtung nach Anspruch 8 oder 9, **dadurch gekennzeichnet, dass** das Gehäuse (13) einen Abschlussdeckel oder einen durchbohrten Deckel (12) aufweist, der an der einen Seite den Elektromotor (11), dessen Welle (13) sich durch die Bohrung des Abschlussdeckels (12) erstreckt, trägt, während das Zahnrad (14) auf der zum Elektromotor (11) entgegengesetzten Seite getragen wird.

## Claims

1. Holding, positioning or clamping device to hold, position or clamp coachwork parts, of the type comprising at least a box (18) comprising mobile apparatus (17) which can be moved in translation under the action of an activating means comprising an electric motor (11), in which the electric motor is a direct current motor or a reversible motor equivalent to a direct current motor and capable of carrying out electric braking,
in which the device comprises command means and means to supply the electric motor (11),
and in which the command means comprises means to detect a position to command the means supplying the electric motor (11) according to the position detected by the said position detection means, to avoid supplying the electric motor (11) in a blockage position presenting a risk of overheating and the electric motor (11) deteriorating, to be able to immobilise the electric motor in an approach position prior to a full effect position, corresponding to holding, positioning or clamping a part of the coachwork, by stopping the supply to the motor or by supplying the motor in reverse which corresponds to electric braking, then by supplying the motor once again to bring about the remaining rotation until the position of full effect is reached of the holding, positioning or clamping device.

2. Device according to claim 1, **characterised by** the fact that the command means comprises starting command means (100) which gives a starting order to supply (101) the electric motor, means (102) to detect an arrival position at a stop and means (103) to memorise this arrival position at a stop as the initial reference position for the device, equipped in combination to initiate (100-107) the device in a mechanical block or stop position.

3. Device according to claim 1 or 2 **characterised by** the fact that the device comprises a modular assembly (4) to supply energy and to control the electric motor which is connected to a rotation sensor such as a rotating coder.

4. Device according to claim 3 **characterised by** the fact that the said modular assembly (4) comprises a switch means between several pre-determined positions which each corresponds to a course, angle or movement with a chosen value to carry out pre-determined positioning, holding or clamping.

5. Device according to claim 4 **characterised by** the fact that the modular assembly to supply energy and to control the electric motor (11) comprises a memory which is capable of memorising the position of the mechanism (7) which is motorised during an actual operating cycle.

6. Device according to claim 4 **characterised by** the fact that the modular assembly to supply energy and to control the rotating motor means comprises a memory which is capable of memorising the position of the motorised mechanism during the previous operating cycle.

7. Device according to claim 4 and claim 5 **characterised by** the fact that the modular assembly to supply energy (4) and for control is capable of comparing a current position of a motorised mechanism with a previous position of a motorised mechanism, in order to detect an anomaly in the operations of the device.

8. Device according to any of the previous claims **characterised by** the fact that the activating means comprises a case (13) containing a pinion (14), which is assembled and driven directly by shaft (23) of the electric motor (11), as well as a toothed wheel (15) forming a drive nut in translation with a threaded pin (16) on the mobile apparatus (17).

9. Device according to claim 8 **characterised by** the fact that the activating means conforms to ensure an anti-rcversibility function or holding in position function of the device when stopped in the absence of an electricity supply to the electric means (11).

10. Device according to claim 8 or 9, **characterised by** the fact that the said case (13) comprises a closing plate or a pierced cover (12) holding the electric motor (11) on one side whose shaft (13) extends through the piercing in the closing plate (12) or cover, in order to support the said pinion (14) on the side opposite the side which holds the electric motor (11).
